# FASCICULE DE BREVET EUROPEEN

(11) **EP 1 332 386 B1**
(45) Date de publication et mention de la délivrance du brevet: **05.01.2005**
(21) Numéro de dépôt: 01993839.8
(22) Date de dépôt: 09.11.2001
(51) Int. Cl.: G02B 6/12

(54) **COMMUTATEUR OPTIQUE INTEGRE MUNIE D'UNE FIBRE OPTIQUE**
MIT EINER GLASFASER AUSGESTATTETER INTEGRIERTER OPTISCHER SCHALTER
DEVICE FOR TRANSMITTING AN OPTICAL WAVE IN A STRUCTURE PROVIDED WITH AN OPTICAL FIBRE AND METHOD FOR MAKING SAME

(30) Priorité: 10.11.2000 FR 0014498
(43) Date de publication de la demande: 06.08.2003
(73) Titulaire: OPSITECH Optical System on a chip, 38054 Grenoble (FR)
(72) Inventeur: BRUEL, Michel, F-38113 Veurey Voroize (FR); MOTTIER, Patrick, F- 38000 Grenoble (FR); ALANIS, Jo[l, F-38380 Biviers (FR)
(74) Mandataire: Casalonga, Axel
(86) Numéro de dépôt international: PCT/FR2001/003480
(87) Numéro de publication internationale: WO 2002/039156

(56) Documents cités:
- EP-A- 0 490 095
- EP-A- 0 639 782
- EP-A- 0 859 260
- DE-A- 3 012 450
- FR-A- 2 479 993
- US-A- 5 239 601
- US-A- 5 612 815
- TIETGEN K-H: "Probleme der Topographie optischer Schaltungen" FREQUENZ, SCHIELE UND SCHON GMBH. BERLIN, DE, vol. 35, no. 9, 1981, pages 247-252, XP002164038 ISSN: 0016-1136

## Description

La présente invention concerne le domaine de la transmission d'ondes optiques dans des structures de guidage optique.

Pour transporter une onde optique, on utilise des guides optiques qui sont couramment constitués de fibres optiques et/ou de composants intégrés qui comprennent des micro-guides optiques. Les fibres optiques comprennent en général un coeur de transmission de l'onde optique qui est entouré par une enveloppe tubulaire, l'indice de réfraction du ou des matériaux constituant le coeur étant supérieur à l'indice de réfraction du matériau constituant l'enveloppe. Les composants à micro-guides intégrés comprennent un coeur en général de transmission de l'onde optique formé entre deux couches, l'indice de réfraction du matériau constituant le coeur étant supérieur à l'indice de réfraction du ou des matériaux constituant ces couches.

Différentes structures à micro-guides optiques intégrés sont en particulier décrites dans les brevets FR 2659148 A, FR 2660444 A et FR2729232 A. Plus particulièrement, le brevet FR 2659148 A décrit un procédé permettant de connecter l'extrémité d'une fibre optique issue d'un câble optique multi-fibres à un micro-guide optique intégré dans une structure.

FR 2659148 A décrit également un dispositif de transmission d'ondes optiques comprenant une fibre optique et une structure intégrée présentant un moyen intégré de guidage d'ondes optiques, la structure comprenant une encoche ou une partie en creux dans laquelle l'extrémité de ladite fibre optique est engagée et fixée, l'extrémité de ladite fibre optique étant optiquement couplée au moyen de guidage optique intégré.

DE 3012450 A décrit un commutateur optique présentant un croisement de plusieurs fibres optiques positionnés dans une rainure.

FR 2729232 A décrit un commutateur opto-mécanique présentant une structure optique intégrée avec un croisement de guides optiques intégrés.

La présente invention concerne un dispositif selon la revendication 1.

La présente invention a pour but de proposer un dispositif de transmission d'ondes optiques permettant d'améliorer et d'augmenter les voies de transmission d'ondes optiques dans une structure afin en particulier de proposer des structures multi-voies à commutateurs, simplifiées et de dimensions réduites.

Selon une variante d'exécution de l'invention, la structure présente une partie déformable munie d'au moins un moyen de guidage optique auxiliaire et un moyen d'actionnement est adapté pour déplacer cette partie déformable entre une première et une seconde positions de façon à coupler optiquement une surface d'extrémité de ce moyen de guidage optique auxiliaire soit avec une extrémité de ladite fibre optique soit avec une surface d'extrémité d'un guide d'onde optique intégré de ladite structure qui s'étend en dessous de la surface précitée.

Selon une autre variante d'exécution de l'invention, la structure comprend un premier guide d'onde optique intégré qui s'étend en dessous de la surface précitée et un deuxième et un troisième guides d'ondes optiques intégrés qui s'étendent à l'extérieur de cette surface.

La structure présente de préférence au moins deux parties déformables munies respectivement d'un moyen de guidage optique auxiliaire et est munie de deux moyens d'actionnement adaptés pour déplacer respectivement lesdits parties déformables entre une première et une seconde positions de façon à d'une part coupler optiquement une surface d'extrémité d'un premier moyen de guidage optique auxiliaire soit avec une surface d'extrémité du premier guide d'onde optique intégré soit avec une surface d'extrémité du deuxième guide optique intégré et d'autre part coupler optiquement une surface d'extrémité d'un second moyen de guidage optique auxiliaire soit avec une surface d'extrémité de ladite fibre optique soit avec une surface d'extrémité du troisième guide optique intégré.

Selon une autre variante d'exécution de l'invention, la structure porte deux fibres optiques et présente deux guides optiques intégrés. La structure présente de préférence une partie déformable munie d'au moins quatre moyens de guidage optique auxiliaires et est munie d'un moyen d'actionnement adapté pour déplacer cette partie déformable entre une première et une seconde positions de façon à coupler optiquement, sélectivement et respectivement une surface d'extrémité des moyens de guidage optique auxiliaires avec les deux extrémités des deux fibres optiques et les deux extrémités des deux guides optiques intégrés.

Selon l'invention, ladite partie déformable comprend de préférence des branches reliées entre elles, dont chacune est munie d'un moyen de guidage optique.

Selon l'invention, l'extrémité de ladite fibre optique est de préférence couplée optiquement à la surface d'extrémité dudit moyen de guidage optique auxiliaire par l'intermédiaire d'un moyen de guidage optique intégré de la structure.

Selon une exécution préférée de l'invention, la partie déformable comprend une poutre flexible en porte-à-faux qui porte longitudinalement le ou les moyens de guidage optique auxiliaires et des moyens de sollicitation pour déformer cette poutre de façon à déplacer son extrémité.

Selon l'invention, les moyens de sollicitation comprennent de préférence des moyens capacitifs ou des moyens inductifs délivrant une force de sollicitation de ladite poutre sous l'effet d'un courant et/ou d'une tension électriques délivrés par lesdits moyens de commande.

A titre d'exemple est décrit un procédé pour la connexion d'une fibre optique à un micro-guide optique intégré dans une structure.

Ce procédé consiste :
- à fabriquer une structure comprenant au moins un micro-guide optique présentant une extrémité ;
- à creuser une encoche en forme de tranchée dans la surface de ladite structure dans la zone de l'extrémité dudit micro-guide optique en rognant une partie d'extrémité de ce micro-guide optique ;
- et à engager par le dessus de ladite surface de la structure et fixer la partie d'extrémité de la fibre optique dans ladite encoche de façon que le coeur de transmission de la fibre optique soit couplé optiquement avec le coeur de transmission du micro-guide optique, la fibre sortant de ladite encoche par une partie arquée.

Ce procédé consiste de préférence à creuser une encoche dont la forme assure un centrage latéral de la partie d'extrémité de la fibre optique.

Ce procédé consiste de préférence à creuser une encoche présentant une paroi d'extrémité au travers de laquelle débouche le micro-guide optique et contre laquelle l'extrémité de la fibre optique vient en appui.

La présente invention sera mieux comprise à l'étude de différents dispositifs de transmission d'ondes optiques décrits à titre d'exemples non limitatifs et illustrés par le dessin sur lequel :
- la figure 1 représente une vue de dessus d'un dispositif de transmission de base selon la présente invention ;
- la figure 2 représente une coupe selon II-II du dispositif de transmission de la figure 1;
- la figure 3 représente une coupe selon III-III du dispositif de transmission de la figure 1 ;
- la figure 4 représente une vue de dessus d'un dispositif de transmission d'ondes optiques à commutateurs mettant en oeuvre le dispositif des figures 1 à 3 ;
- la figure 5 représente une coupe horizontale du dispositif de transmission de la figure 4 ;
- la figure 6 représente une vue de côté du dispositif de la figure 4 ;
- la figure 7 représente une vue de dessus d'un autre dispositif de transmission d'ondes optiques à commutateurs mettant en oeuvre le dispositif des figures 1 à 3 ;
- la figure 8 représente une vue de côté du dispositif de la figure 7 ;
- et la figure 9 représente une coupe du dispositif de transmission des figures 1 à 3 en cours de fabrication.

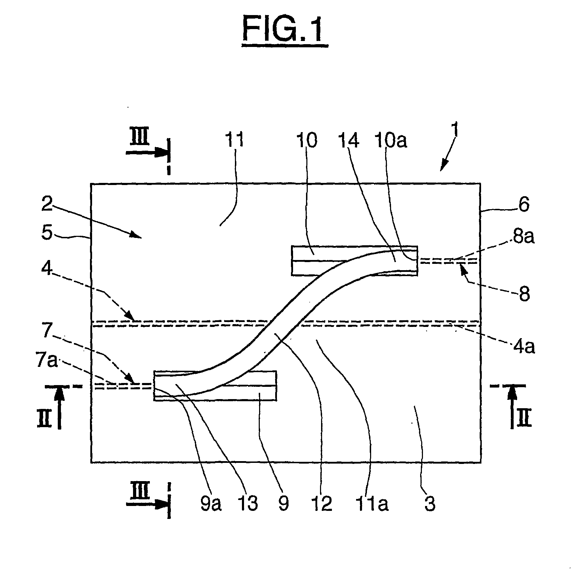

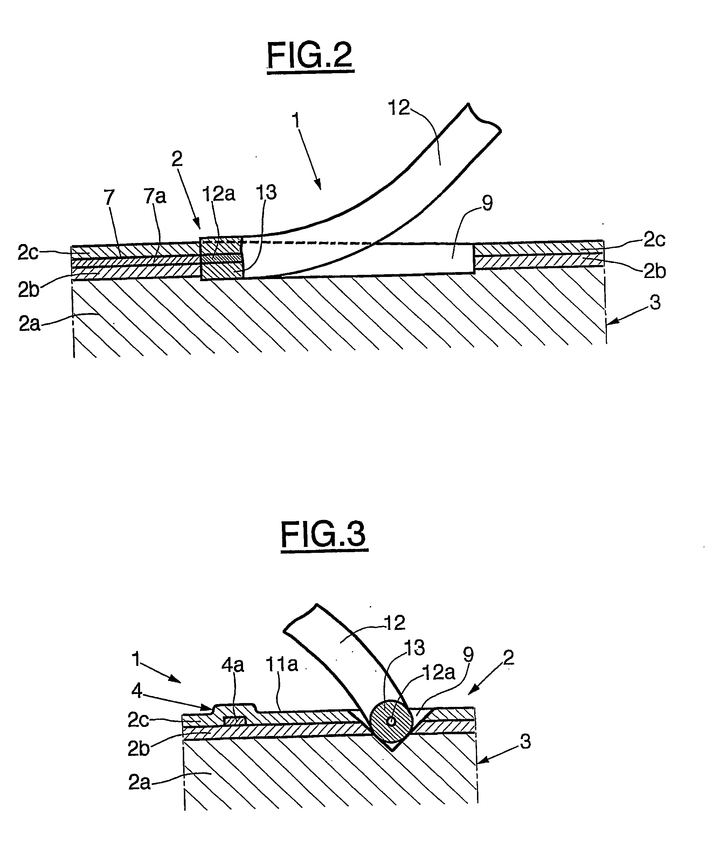

En se reportant aux figures 1 à 3, on voit qu'on a représenté un dispositif de transmission d'ondes optiques qui comprend une structure intégrée 2 de guidage optique constituée par un bloc 3 qui comprend des micro-guides intégrés.

La structure 2 comprend un micro-guide intégré 4 qui s'étend longitudinalement par exemple entre deux délimitations transversales 5 et 6 du bloc 3.

La structure 2 comprend en outre des portions de micro-guides intégrées de liaison 7 et 8 qui s'étendent longitudinalement respectivement à partir des surfaces 5 et 6 du bloc 3 et qui débouchent dans des encoches longitudinales 9 et 10 ménagées dans la face supérieure 11 du bloc 3, de part et d'autre et à distance du micro-guide optique 4.

Les surfaces d'extrémité 9a et 10a des encoches 9 et 10 qui contiennent des surfaces d'extrémité des micro-guides optiques 7 et 8 se font face et sont distantes l'une de l'autre.

Pour constituer la structure 2 qui vient d'être décrite, le bloc 3 comprend un substrat 2a par exemple en silicium sur lequel est déposée une première couche 2b par exemple en silice non dopée puis une deuxième couche 2c par exemple également en silice non dopée. Sur la face supérieure de la couche 2b et sous la couche 2c sont formés les coeurs de transmission 4a, 7a et 8a des micro-guides optiques 4, 7 et 8, par exemple en silice dopée, en nitrure de silicium ou en oxynitrure de silicium.

A titre indicatif, ces coeurs de transmission 4a, 7a et 8a, qui sont coplanaires, sont de section rectangulaire ou carrée et présentent des dimensions comprises entre 5 et 14 microns. De plus, pour constituer les micro-guides optiques précités, l'indice de réfraction du matériau constituant leurs coeurs respectifs de transmission est supérieur à l'indice de réfraction du ou des matériaux constituant les couches les entourant.

Dans une variante, les coeurs de transmission des micro-guide optique pourraient affleurer à la surface dudit bloc, mais, d'une manière générale, se trouveraient ainsi sous cette surface.

Le dispositif 1 comprend en outre une fibre optique 12 dont les parties d'extrémité 12a et 12b sont engagées, par le dessus de ladite surface de la structure, longitudinalement dans les encoches creusées 9 et 10 de telle sorte que ses surfaces d'extrémités soient en contact avec les faces 9a et 10a des encoches 9 et 10. Ces parties d'extrémité 12a et 12b de la fibre optique 12 sont fixées dans les encoches creusées 9 et 10 par exemple par collage. Dans l'exemple représenté, la fibre optique n'est pas tendue et présente des parties arquées lui conférant la formant d'une double courbure en S allongé, la fibre sortant des encoches par deux parties arquées.

Ainsi, la partie de la fibre optique 12, qui s'étend entre ses parties d'extrémité engagées dans les encoches 9 et 10 et desquelles elles ressortent vers le haut, enjambe à distance la surface supérieure 11a du bloc 11 qui sépare ces encoches et en-dessous de laquelle est prévu le micro-guide optique intégré longitudinal 4.

Dans l'exemple représenté, les encoches longitudinales 9 et 10 du bloc 3 sont de section en forme de V et sont creusées de telle sorte que le coeur de transmission 12a de la fibre 12 soit, dans ses parties d'extrémité 13 et 14, respectivement en alignement avec les coeurs de transmission 7a et 8a des micro-guides optiques intégrés 7 et 8.

Il résulte de la description qui précède qu'une onde optique circulant dans le micro-guide optique intégré 7, la fibre optique 12 et le micro-guide optique intégré 8, dans un sens ou dans l'autre, passe d'une côté à l'autre du micro-guide optique intégré 4 dans lequel circule une autre onde optique, dans un sens ou dans l'autre.

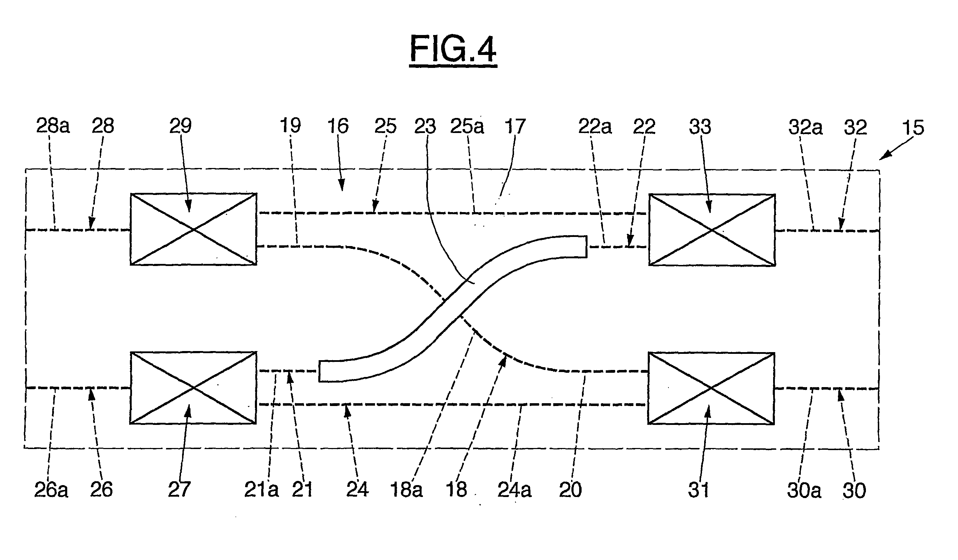

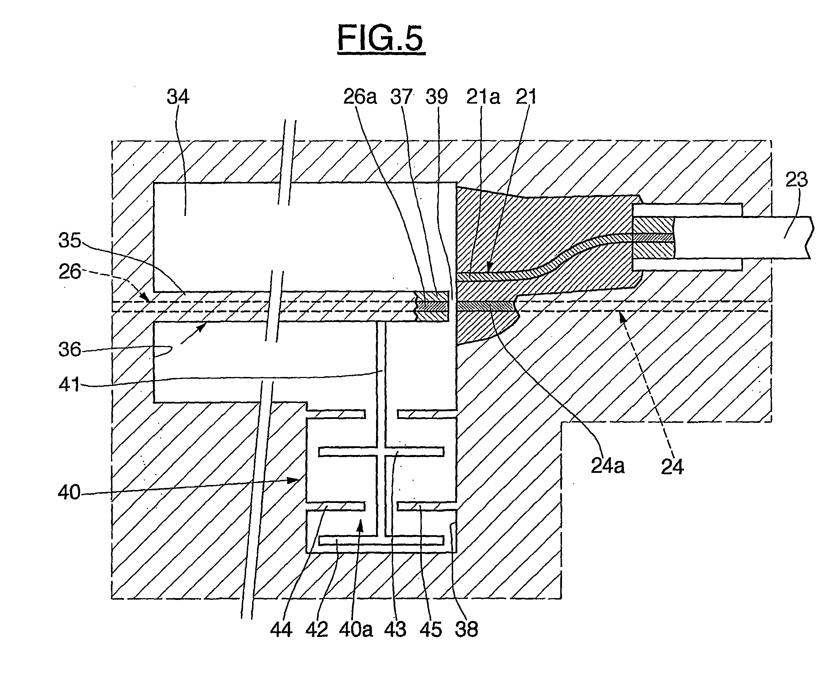

En se reportant aux figures 4 et 5, on voit qu'on a représenté un dispositif de transmission d'ondes optiques 15 qui constitue un dispositif de commutation optique et qui met en oeuvre le dispositif de transmission d'ondes optiques représenté sur les figures 1 à 3.

Ce dispositif 15 comprend en effet une structure 16 à micro-guides optiques intégrés dans un bloc 17 et formés dans un même plan.

Un premier micro-guide optique intégré 18 présente un coeur de transmission 18a en forme de S allongé de telle sorte que ses parties d'extrémité 19 et 20 s'étendent longitudinalement et soient décalées transversalement.

Un micro-guide optique intégré de liaison 21 présente un coeur de transmission 21a qui s'étend en alignement avec la partie d'extrémité 20 du micro-guide optique 18 et un micro-guide optique intégré de liaison 22 présente un coeur de transmission 22a qui s'étend en alignement avec la partie d'extrémité 19 du micro-guide optique 18. Les micro-guides optiques de liaison 21 et 22 sont ainsi disposés de part et d'autre du micro-guide optique 18 et à distance de ce dernier.

Les extrémités en vis-à-vis des micro-guides optiques intégrés 21 et 22 sont reliées via une fibre optique 23 comme décrit en référence aux figures 1 à 3, cette fibre enjambant la surface du bloc 17 sous laquelle est prévu le guide-optique intégré 18.

Un deuxième et un troisième micro-guides optiques intégrés 24 et 25 présentent des coeurs de transmission 24a et 25a qui s'étendent longitudinalement, de part et d'autre de l'ensemble constitué par les micro-guides optiques intégrés tels que décrits ci-dessus.

La structure 16 comprend en outre, de part et d'autre de sa zone dans laquelle est prévu l'ensemble des micro-guides optiques précités et la fibre optique 23, quatre micro-guides optiques intégrés auxiliaires 26, 28, 30 et 32, qui s'étendent longitudinalement et qui sont susceptibles d'être reliés sélectivement aux micro-guides optiques précités de la manière suivante.

Le coeur de transmission 26a du micro-guide optique auxiliaire 26 est susceptible d'être couplé optiquement soit avec le coeur de transmission 21a du micro-guide de liaison 21, soit avec le coeur de transmission 24a du micro-guide 24 par l'intermédiaire d'un commutateur optique 27.

Le coeur de transmission 28a du micro-guide optique auxiliaire 28 est susceptible d'être couplé optiquement soit avec le coeur de transmission 18a du micro-guide 18, à l'extrémité de sa partie 19, soit avec le coeur de transmission 25a du micro-guide 25 par l'intermédiaire d'un commutateur optique 229.

Le coeur de transmission 30a du micro-guide optique auxiliaire 30 est susceptible d'être couplé optiquement soit avec le coeur de transmission 18a du micro-guide 18, à l'extrémité de sa partie 20, soit avec le coeur de transmission 24a du micro-guide 24 par l'intermédiaire d'un commutateur optique 31.

Le coeur de transmission 32a du micro-guide optique auxiliaire 32 est susceptible d'être couplé optiquement soit avec le coeur de transmission 22a du micro-guide de liaison 22, soit avec le coeur de transmission 25a du micro-guide 25 par l'intermédiaire d'un commutateur optique 33.

En se reportant à la figure 5, on va maintenant décrire un exemple de réalisation du commutateur optique 27, les commutateurs optiques 29, 31 et 33 pouvant présenter des structures équivalentes.

Le bloc 17 comprend une cavité 34 dans laquelle s'étend en porte-à-faux une poutre flexible longitudinale 35, à partir d'une paroi verticale 36 de cette cavité 24. La surface d'extrémité 37 de la poutre 35, perpendiculaire à sa direction longitudinale, s'étend parallèlement et à faible distance d'une surface verticale 38 de la cavité 34 parallèle à sa paroi verticale 5, en formant un espace 39 entre ces surfaces 37 et 38.

Le micro-guide optique 26a se prolonge le long de la poutre 35 jusqu'à son extrémité 37.

Les micro-guides optiques 21a et 24a débouchent dans la cavité 34 sur sa surface 38.

La poutre flexible 35 est munie d'un organe d'actionnement 40, en particulier tel que le suggère le brevet FR 2 660 444 A et est constitué plus particulièrement de la manière suivante.

A faible distance de son extrémité 37, la poutre flexible 35 présente, dans la cavité 34, un bras latéral 41 qui porte, de part et d'autre, des branches longitudinales 42 et 43 entre lesquelles s'étendent respectivement et à distance des branches 44 et 45 ménagées en saillie dans la cavité 34 à partir de parois verticales opposées de cette cavité.

Les faces verticales en vis-à-vis des branches 42 et 43 d'une part et des branches 44 et 45 d'autre part sont recouvertes de couches métalliques non représentées de façon à constituer les électrodes d'un organe d'entraînement capacitif ou inductif 40a. Ces électrodes sont reliées à des lignes d'alimentation électrique non représentées par exemple par des pistes et/ou des ponts filaires non représentés.

L'organe d'entraînement 40 est adapté et est susceptible d'être commandé électriquement de telle sorte que la poutre flexible 35 puisse se déformer pour occuper deux positions extrèmes dans lesquelles la surface d'extrémité du coeur de transmission 26a du micro-guide optique auxiliaire 26 puisse être couplée optiquement soit avec la surface d'extrémité du coeur de transmission 21a du micro-guide optique de liaison 21, soit avec la surface d'extrémité du coeur de transmission 24a du micro-guide optique 24.

La disposition de la figure 4 constitue en conséquence un dispositif de commutation optique deux voies optiques vers deux voies optiques dans lequel les ondes optiques entrantes et les ondes optiques sortantes circulent dans le même sens longitudinal.

En effet, en commandant sélectivement les dispositifs d'entraînement 40a des commutatateurs 27, 29, 21 et 34, les micro-guides optiques 26 et 28 d'entrée/sortie peuvent être sélectivement reliés au micro-guide optique auxiliaire de sortie/d'entrée 30 et 32, sans qu'aucun guide optique ne se croise du fait de l'existence de la fibre optique 23 qui constitue un pont de passage au-dessus du micro-guide optique 18.

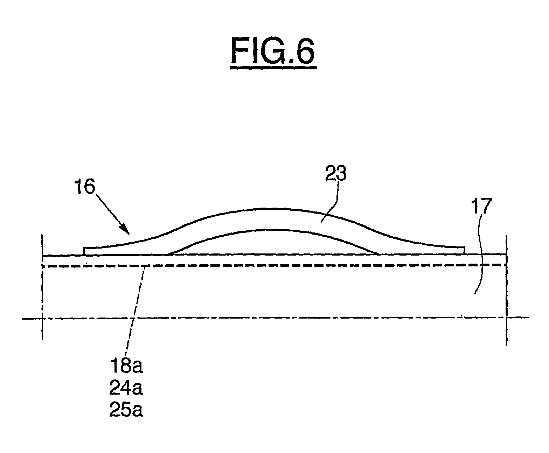

En se reportant à la figure 6, on va maintenant décrire un dispositif de transmission d'ondes optiques 46 constituant un dispositif de commutation optique et qui met en oeuvre également la structure du dispositif de transmission d'ondes optiques décrit précédemment en référence aux figures 1 à 3.

Le bloc 47a à micro-guides optiques intrégrés de la structure 48 du dispositif 46 comprend une cavité 49 dans laquelle s'étend, comme dans l'exemple décrit en référence à la figure 5, une poutre longitudinale 50 en porte-à-faux qui, cette fois, comprend quatre branches longitudinales 51, 52, 53 et 54 espacées transversalement, dont les surfaces d'extrémité s'étendent à faible distance d'une paroi transversale 55 de la cavité 49. Ainsi, la raideur de la poutre 50 peut être déterminée par les sections de ses branches 51-54.

Les branches 51-54 de la poutre 50 présentent, longitudinalement et jusqu'à leurs extrémités précitées, les coeurs de transmission 56a, 57a, 58a et 59a de quatre micro-guides optiques auxiliaires intégrés 56, 57, 58 et 59.

A proximité de leurs extrémités, les branches 51-54 de la poutre 50 sont reliées par des traverses 60, 61 et 62. La branche latérale 54 porte un bras latéral 63 relié à un organe d'actionnement 64 par exemple équivalent à l'organe d'actionnement 40 de l'exemple décrit en référence à la figure 5.

Ainsi, comme dans cet exemple, les extrémités des branches 51-54 constituant la poutre 50 sont susceptibles d'être déplacées horizontalement et en face de la surface 55 de la cavité 49 par l'organe d'entraînement 64.

La structure 48 comprend en outre, dans la partie du bloc 47 située en face de l'extrémité de la poutre 50, deux micro-guides optiques intégrés 65 et 66 dont les coeurs de transmission 65a et 66a forment des boucles en forme de fer à cheval et dont les extrémités débouchent longitudinalement dans la cavité 49 au travers de sa paroi 55, respectivement en face des extrémités des branches 51 et 52 d'une part et 53 et 54 d'autre part.

A proximité des quatre parties d'extrémité des micro-guides optiques intégrés 65 et 66, sont prévus quatre micro-guides optiques de liaison 67, 68, 69 et 70 dont les coeurs de transmission 67a, 68a, 69a et 70a s'étendent longitudinalement débouchent dans la cavité 49 au travers de sa paroi 55.

Les micro-guides optiques de liaison 67 et 70 d'une part et les micro-guides optiques de liaison 68 et 69 d'autre part sont connectés optiquement par des fibres optiques 71 et 72 conformément aux dispositions décrites en référence aux figures 1 à 3.

Ces fibres optiques 71 et 72 sont courbées en forme de fer à cheval et passent au-dessus de la surface du bloc 47 de telle sorte que la fibre optique 71 enjambe le micro-guide optique intégré 65 et que la fibre optique 72 enjambe le micro-guide optique intégré 66.

L'organe d'entraînement 64 est adapté pour déformer la poutre 50 de telle sorte que ses branches 51-54 reliées par les traverses 60-62 puissent se déplacer entre deux positions extrêmes.

Lorsque la poutre 50 est à une position extrême, le micro-guide optique 56 de la branche 51 est connecté optiquement au micro-guide optique 59 de la branche 54 via les micro-guides optiques de liaison 67 et 70 et la fibre optique 71, et le micro-guide optique 57 de la branche 52 est connecté optiquement au micro-guide optique 58 de la branche 53 via les micro-guides optiques de liaison 68 et 69 et la fibre optique 72.

Lorsque la poutre 52 est à son autre position extrème, le micro-guide optique 56 de la branche 51 et le micro-guide optique 57 de la branche 52 sont connectés optiquement via le micro-guide optique 65 et le micro-guide optique 58 de la branche 53 est connecté optiquement au micro-guide optique 59 de la branche 54 via le micro-guide optique 66.

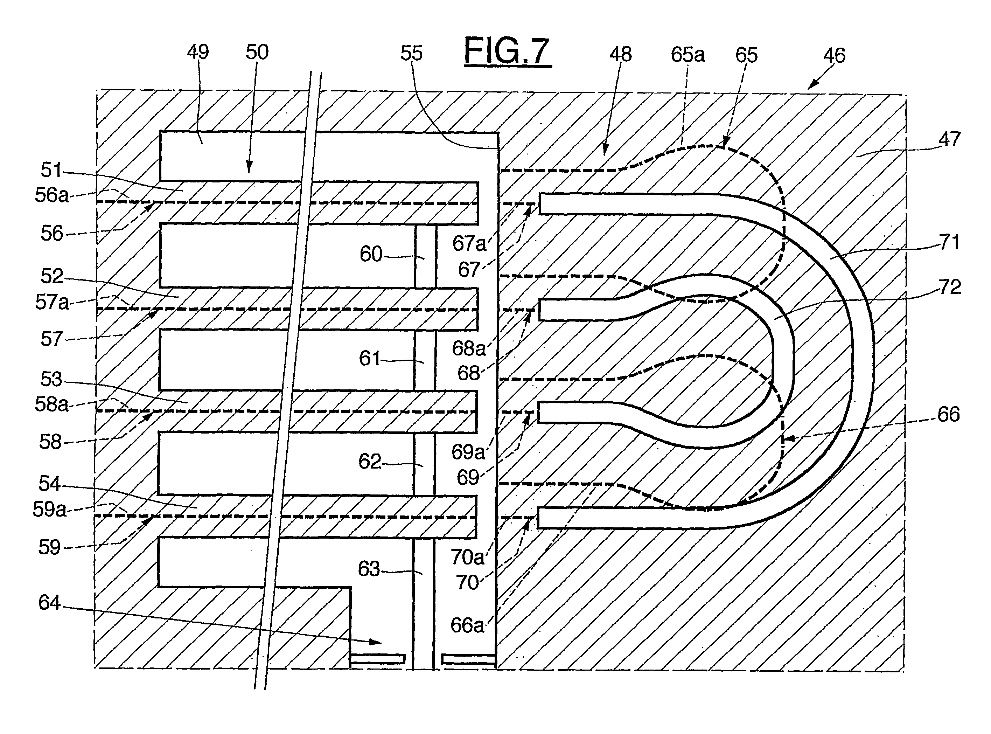

La disposition de la figure 7 constitue en conséquence un dispositif de commutation optique deux voies optiques vers deux voies optiques, dans lequel les ondes optiques entrantes et sortantes circulent longitudinalement en sens inverse via la poutre 50.

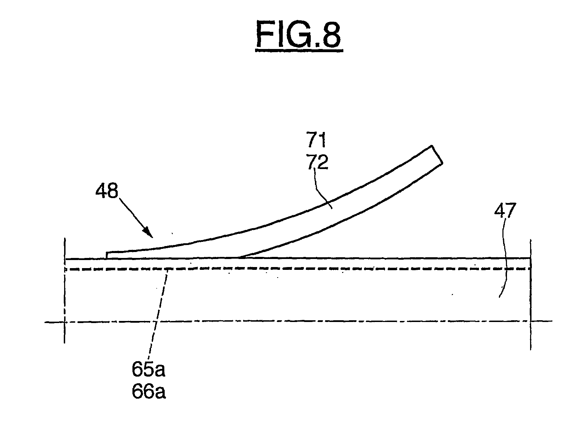

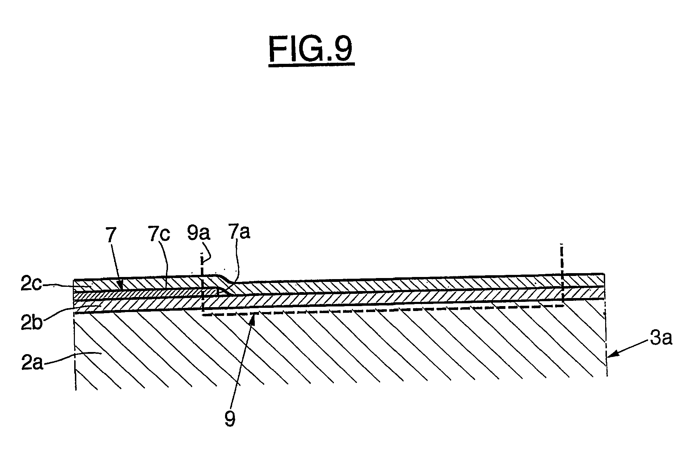

En se reportant aux figures 8 et 9, on va maintenant décrire comment les encoches longitudinales 9 et 10 du bloc 3 de la structure intégrée 2 décrite en référence aux figures 1 à 3 peuvent être fabriquées, en prenant pour exemple l'encoche 9.

On fabrique un bloc 3a qui comprend le micro-guide 7 dont le coeur de transmission 7a présente une extrémité 7b située dans la zone de l'encoche 9 à réaliser et à distance des bords de la surface de la structure.

Puis, par un procédé de photolithographie et gravage, on creuse l'encoche 9 en forme de tranchée de telle sorte que cette opération rogne, par exemple de quelques microns, la partie d'extrémité 7c du coeur de transmission 7a en formant la surface d'extémité 9a et une surface d'extrémité opposée, qui s'étendent perpendiculairement à la direction longitudinale de ce coeur 7a et de l'encoche 7, et les surfaces longitudinale d'appui latéral de la fibre optique, les bords de l'encoche n'atteignant pas les bords de la surface 11 de la structure.

Ainsi, le positionnement de l'encoche 7 n'est pas conditionné par la position de l'extrémité 7b du coeur de transmission 7a. De plus, la surface d'extrémité de ce coeur de transmission 7a peut coîncider exactement avec la paroi d'extrémité 9a de l'encoche 7 de telle sorte que le couplage optique entre le coeur de transmission 7a et le coeur de transmission 12a de la fibre optique 12 peut être d'excellente qualité.

Dans un autre exemple d'application non représenté des dispositions des figures 1 à 3, une structure intégrée pourrait comprendre deux voies d'entrée et deux voies de sortie entre lesquelles seraient respectivement disposés un démultiplexeur optique, des lignes transmettant chacune une ou des longueurs d'ondes particulières et un multiplexeur optique. En utilisant une ou plusieurs fibres optiques montées comme décrit précédemment, on pourrait extraire une onde optique à une longueur d'onde déterminée d'une ligne de l'une des voies d'entrée pour l'introduire dans l'autre voie de sortie.

Une telle disposition constitue ainsi un commutateur d'une partie d'une onde optique d'une voie dans une autre voie.

La présente invention ne se limite pas aux exemples ci-dessus décrits. Bien des variantes de réalisation sont possibles sans sortir du cadre défini par les revendications annexées.

## Revendications

1. Dispositif de transmission d'ondes optiques comprenant une fibre optique (12) et une structure intégrée présentant des moyens intégrés de guidage d'ondes optiques, ladite structure présentant des parties en creux ou encoches (9, 10) réalisées de part et d'autre d'au moins un moyen de guidage optique intégré (4) qui s'étend en dessous de ou affleure à une surface (11a) de la structure séparant lesdites parties en creux, lesdites parties en creux ou encoches (9, 10) étant adaptées pour recevoir et y fixer les parties d'extrémité (13, 14) de ladite fibre optique (12) qui enjambe ladite surface (11a), les extrémités de ladite fibre optique (12) étant engagés et fixées dans lesdites parties en creux ou encoches et les extrémités de ladite fibre optique étant respectivement optiquement couplées à des moyens de guidage optique (7, 8) intégrés.

2. Dispositif selon la revendication 1, **caractérisé par le fait que** la structure présente une partie déformable (35) munie d'au moins un moyen de guidage optique auxiliaire (26) et qu'un moyen d'actionnement (40) est adapté pour déplacer cette partie déformable entre une première et une seconde positions de façon à coupler optiquement une surface d'extrémité de ce moyen de guidage optique auxiliaire soit avec une extrémité de ladite fibre optique soit avec une surface d'extrémité d'un guide d'onde optique intégré de ladite structure qui s'étend en dessous de la surface précitée.

3. Dispositif selon la revendication 1, **caractérisé par le fait que** la structure comprend un premier guide d'onde optique intégré (18) qui s'étend en dessous de la surface précitée et un deuxième et un troisième guides d'ondes optiques intégrés (24, 25) qui s'étendent à l'extérieur de cette surface, que la structure présente au moins deux parties déformables (27, 28) munies respectivement d'un moyen de guidage optique auxiliaire et que la structure est munie de deux moyens d'actionnement adaptés pour déplacer respectivement lesdits parties déformables entre une première et une seconde positions de façon à d'une part coupler optiquement une surface d'extrémité d'un premier moyen de guidage optique auxiliaire soit avec une surface d'extrémité du premier guide d'onde optique intégré soit avec une surface d'extrémité du deuxième guide optique intégré et d'autre part coupler optiquement une surface d'extrémité d'un second moyen de guidage optique auxiliaire soit avec une surface d'extrémité de ladite fibre optique soit avec une surface d'extrémité du troisième guide optique intégré.

4. Dispositif selon la revendication 1, **caractérisé par le fait que** la structure porte deux fibres optiques (71, 72) et présente deux guides optiques intégrés (65, 66), que la structure présente une partie déformable (50) munie d'au moins quatre moyens de guidage optique auxiliaires (56-59) et que la structure est munie d'un moyen d'actionnement (64) adapté pour déplacer cette partie déformable entre une première et une seconde positions de façon à coupler optiquement, sélectivement et respectivement une surface d'extrémité des moyens de guidage optique auxiliaires avec les deux extrémités des deux fibres optiques et les deux extrémités des deux guides optiques intégrés.

5. Dispositif selon la revendication 4, **caractérisé par le fait que** ladite partie déformable (50) comprend des branches (51-54-reliées entre elles, dont chacune est munie d'un moyen de guidage optique (56-59).

6. Dispositif selon la revendication 2 à 5, **caractérisé par le fait que** l'extrémité de ladite fibre optique est couplée optiquement à la surface d'extrémité dudit moyen de guidage optique auxiliaire par l'intermédiaire d'un moyen de guidage optique intégré (67-70) de la structure.

7. Dispositif selon l'une quelconque des revendications 2 à 6, **caractérisé par le fait que** la partie déformable comprend une poutre flexible (35 ; 50)) en porte-à-faux qui porte longitudinalement le ou les moyens de guidage optique auxiliaires (26 ; 56, 59)) et des moyens de sollicitation (40 ; 64)) pour déformer cette poutre de façon à déplacer son extrémité.

8. Dispositif selon la revendication 7, **caractérisé par le fait que** les moyens de sollicitation comprennent des moyens capacitifs ou des moyens inductifs (40a) délivrant une force de sollicitation de ladite poutre sous l'effet d'un courant et/ou d'une tension électriques délivrés par lesdits moyens de commande.

## Claims

1. Optical wave transmission device comprising an optical fibre (12) and an integrated structure having integrated optical wave guiding means, said structure having hollowed parts or notches (9, 10) made on each side of at least one integrated optical guiding means (4) which extends below or is flush with a surface (11a) of the structure separating said hollowed parts, said hollowed parts or notches (9, 10) being designed to receive and fix therein the end parts (13, 14) of said optical fibre (12) that straddles said surface (11a), the ends of said optical fibre (12) being engaged and fixed in said hollowed parts or notches and the ends of said optical fibre being optically coupled to integrated optical guiding means (7, 8), respectively.

2. Device according to Claim 1, **characterized in that** the structure has a deformable part (35) provided with at least one auxiliary optical guiding means (26) and **in that** an actuating means (40) is designed to move this deformable part between a first position and a second position so that an end surface of this auxiliary optical guiding means is optically coupled either to one end of said optical fibre or to an end surface of an integrated optical waveguide of said structure which extends below the aforementioned surface.

3. Device according to Claim 1, **characterized in that** the structure comprises a first integrated optical waveguide (18) which extends below the aforementioned surface and second and third integrated optical waveguides (24, 25) which extend to the outside of this surface, **in that** the structure has at least two deformable parts (27, 28) provided respectively with an auxiliary optical guiding means and **in that** the structure is provided with two actuating means designed to move the respective said deformable parts between a first position and a second position so that, on the one hand, an end surface of a first auxiliary optical guiding means is optically coupled either to an end surface of the first integrated optical waveguide or to an end surface of the second integrated optical waveguide and, on the other hand, an end surface of a second auxiliary optical guiding means is optically coupled either to an end surface of said optical fibre or to an end surface of the third integrated optical waveguide.

4. Device according to Claim 1, **characterized in that** the structure supports two optical fibres (71, 72) and has two integrated optical waveguides (65, 66), **in that** the structure has a deformable part (50) provided with at least four auxiliary optical guiding means (56-59) and **in that** the structure is provided with an actuating means (64) designed to move this deformable part between a first position and a second position so that an end surface of the auxiliary optical guiding means is optically coupled, selectively and respectively, to the two ends of the two optical fibres and the two ends of the two integrated optical waveguides.

5. Device according to Claim 4, **characterized in that** said deformable part (50) comprises branches (51-54) connected together, each of which is provided with an optical guiding means (56-59).

6. Device according to Claims 2 to 5, **characterized in that** the end of said optical fibre is optically coupled to the end surface of said auxiliary optical guiding means via an integrated optical guiding means (67-70) of the structure.

7. Device according to any one of Claims 2 to 6, **characterized in that** the deformable part comprises a cantilevered flexible beam (35; 50), which supports the one or more auxiliary optical guiding means (26; 56, 59) longitudinally, and stressing means (40; 64) for deforming this beam so as to move its end.

8. Device according to Claim 7, **characterized in that** the stressing means comprise capacitive means or inductive means (40a) that deliver a force for stressing said beam owing to the effect of an electrical current and/or an electrical voltage that are delivered by said control means.

## Patentansprüche

1. Vorrichtung zur Übertragung von optischen Wellen, **dadurch gekennzeichnet, dass** diese Vorrichtung eine Glasfaser (12) und eine integrierte Struktur umfasst, wobei diese integrierte Struktur integrierte Mittel zur Leitung von optischen Wellen, sowie ausgerundete oder nutförmige Teile (9, 10) aufweist, wobei diese Teile auf jeweils beiden Seiten von mindestens einem integrierten optischen Leitmittel (4) ausgeführt sind, wobei dieses bzw. diese Leitmittel unterhalb oder oben in einer Oberfläche (11a) der zwischen den beiden vertieften Teilen liegenden Struktur versenkt sind, wobei besagte ausgerundeten oder vertieften Teile (9, 10) geeignet sind, die Enden (13, 14) der genannten Glasfaser aufzunehmen und dort zu halten, wobei diese Glasfaser die genannte Fläche (11a) überspannt, wobei die Enden der genannten Glasfaser (12) in den genannten ausgerundeten oder nutförmigen Teilen befestigt und jeweils optisch mit den integrierten optischen Leitmitteln (7, 8) gekuppelt sind.

2. Vorrichtung nach Anspruch 1, **dadurch gekennzeichnet, dass** die Struktur einen verformbaren Teil (35) aufweist, wobei dieser verformbare Teil mit mindestens einem optischen Hilfsleitmittel (26) versehen ist, und dass ein Betätigungsmittel (40) geeignet ist, diesen verformbaren Teil zwischen einer ersten und einer zweiten Position zu verstellen, wodurch die Oberfläche eines Endes dieses optischen Hilfsleitmittels optisch entweder mit einem Ende der genannten Glasfaser, oder mit der Oberfläche eines Endes eines integrierten optischen Wellenleiters derjenigen Struktur verbunden wird, die unter der vorstehend genannten Fläche liegt.

3. Vorrichtung nach Anspruch 1, **dadurch gekennzeichnet, dass** die Struktur einen ersten integrierten optischen Wellenleiter (18) aufweist, wobei dieser Wellenleiter unter der vorstehend genannten Oberfläche liegt, sowie dass die Struktur einen zweiten und einen dritten integrierten optischen Wellenleiter (24, 25) aufweist, wobei diese Wellenleiter außerhalb dieser Oberfläche angeordnet sind, sowie dadurch, dass die Struktur mindestens zwei verformbare Teile (27, 28) aufweist, wobei diese verformbaren Teile jeweils mit einem optischen Hilfsleitmittel versehen sind, und dass die Struktur mit zwei Betätigungsmitteln versehen ist, welche geeignet sind, jeweils die genannten verformbaren Teile zwischen einer ersten und einer zweiten Position zu verstellen, wodurch einerseits eine Oberfläche am Ende eines ersten optischen Hilfsleitmittel entweder mit der Oberfläche am Ende des ersten integrierten optischen Wellenleiters, oder mit der Oberfläche am Ende des zweiten integrierten optischen Wellenleiter optisch gekoppelt wird, und andererseits eine Oberfläche am Ende eines zweiten optischen Hilfsleitmittels entweder mit der Oberfläche am Ende der genannten Glasfaser, oder mit der Oberfläche am Ende des dritten integrierten optischen Leiters optisch gekoppelt wird.

4. Vorrichtung nach Anspruch 1, **dadurch gekennzeichnet, dass** die Struktur zwei Glasfasern (71, 72) trägt und zwei integrierte optische Leiter (65, 66) aufweist, sowie dass die Struktur einen verformbaren Teil (50) aufweist, wobei dieser verformbare Teil mit mindestens vier optischen Hilfsleitmitteln (56-59) ausgestattet ist, und dass die Struktur mit einem Betätitungsmittel (64) ausgestattet ist, welches geeignet ist, diesen verformbaren Teil zwischen einer ersten und einer zweiten Position zu verstellen, wodurch selektiv jeweils eine Oberfläche an einem Ende der optischen Hilfsleitmittel mit den beiden Enden der beiden Glasfasern und den beiden Enden der beiden integrierten optischen Leiter optisch gekoppelt wird.

5. Vorrichtung nach Anspruch 4, **dadurch gekennzeichnet, dass** das genannte verformbare Teil (50) miteinander verbundene Ausläufer (51-54) aufweist, von denen jeder mit einem optischen Leitmittel (56-59) versehen ist.

6. Vorrichtung nach Anspruch 2 bis 5, **dadurch gekennzeichnet, dass** das Ende der genannten Glasfaser durch ein integriertes optisches Leitmittel (67-70) der Struktur mit der Oberfläche am Ende des genannten optischen Hilfsleitmittel optisch gekoppelt ist.

7. Vorrichtung nach einem der vorangegangenen Ansprüche 2 bis 6, **dadurch gekennzeichnet, dass** das verformbare Teil eine überhängende biegbare Strebe (35; 50) umfasst, welche längs das oder die optischen Hilfsleitmittel (26; 56, 59) sowie Beanspruchungsmittel (40; 64) trägt, wobei diese Beanspruchungsmittel zur Verformung der Strebe dienen, wodurch das Ende der Strebe verstellt wird.

8. Vorrichtung nach Anspruch 7, **dadurch gekennzeichnet, dass** die Beanspruchungsmittel kapazitive oder induktive Mittel (40a) umfassen, wobei diese Mittel unter Einwirkung von Strom und/oder einer elektrischen Spannung eine Beanspruchungskraft auf die genannte Strebe ausüben, wobei dieser Strom bzw. diese Spannung von den genannten Steuermitteln geliefert wird.
